# EUROPEAN PATENT SPECIFICATION

(11) **EP 1 065 100 B1**
(45) Date of publication and mention of the grant of the patent: **03.05.2006**
(21) Application number: 00202330.7
(22) Date of filing: 03.07.2000
(51) Int. Cl.: B60P 3/24, B60P 1/60, B65G 53/14

(54) **Vehicle for transporting powder-form, granular or pellet-like material**
Fahrzeug für den Transport von pulverförmigem, körnigem oder pelletförmigem Schüttgut
Véhicule pour transporter des matériaux pulvérulents, granulés ou en boulettes

(30) Priority: 02.07.1999 BE 9900458
(43) Date of publication of application: 03.01.2001
(73) Proprietor: Welgro B.V., NL-7141 DC Groenlo (NL)
(72) Inventor: Wellink, Wiljoni, Franciscus, Bernardus, Maria, 7141 DG Groenlo (NL)
(74) Representative: Prins, Hendrik Willem

(56) References cited:
- EP-A- 0 043 386
- EP-A- 0 586 752
- DE-A- 1 531 094
- NL-A- 7 514 607

## Description

The invention relates to a vehicle as designated in the preamble of claim 1.

Such a vehicle is known from EP-B-0586752.

The invention has for its object to avoid with more certainty that residues remain behind in the discharge funnel after unloading, since varying types of material are transported in each of the compartments during diverse successive transport runs. The object here is to offload the material quickly.

To this end the vehicle according to the invention has the characteristic of claim 1.

Preferred embodiments of the vehicle are designated in the dependent claims.

The invention will be elucidated in the description following hereinafter with reference to a drawing. In the drawing:
figure 1 shows a side view, partly in lengthwise section, of a vehicle according to the invention;
figure 2 shows on a larger scale two mutually perpendicular cross-sections of detail II of the vehicle of figure 1 with a closing member in opened and closed position;
figure 3 shows on larger scale a cross-section through the bottom part of figure 2; and
figure 4 shows on larger scale a vertical section through the closing member of figure 2.

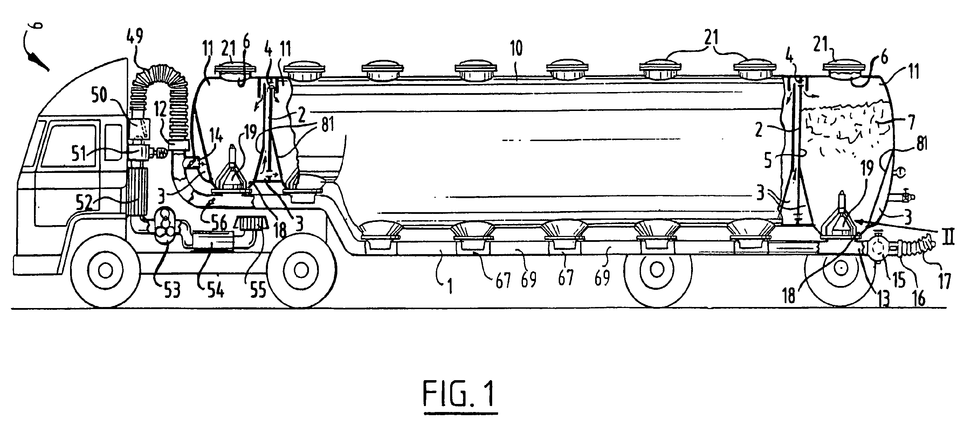

The vehicle 9 of figure 1 carries a tank 10 which is divided into a number of reservoirs 11, the walls of which incline at their lower ends 81 such that the material 7 for unloading slides automatically downward along these walls into a conical discharge funnel 8 connecting thereto. Filling openings 6 of reservoirs 11 are closed airtightly by means of covers 21. Reservoirs 11 are mutually separated by transverse partitions 5 and communicate with one another via air passages 4 in the top ends of transverse partitions 5.

Lying beneath discharge funnel 8 is a common discharge pipe 1, the front end of which is formed by a connecting member 12 for compressed air and the rear end of which is formed by a discharge 13 for air with material. Discharge pipe 1 communicates via a conduit 14 with spaces 3. The discharge 13 is connected via a stop valve 15 onto a coupling 16 for a hose 17.

Each funnel 8 is connected via a discharge funnel opening 18 onto the discharge pipe 1. This discharge funnel opening 18 can be closed off by means of a round closing member 19 which seals with its vertical cylindrical outer face 42 against a torus-shaped rubber sealing ring 20 at the position of discharge funnel opening 18, which sealing ring 20 is received in an annular chamber 82 of a casting 83. This casting 83 is connected with its flange 37 and bolts, with interposing of an elastic sealing ring 57, to the flange 39 of a round funnel piece 84 manufactured from plate material and welded on the bottom ends 81.

The connecting device 12 is connected via a hose 49, a non-return valve 50, a safety valve 51 and a damper 52 to a Roots blower 53 or a screw compressor which via a damper 54 and a filter 55 draws in much air and, at a comparatively low pressure of 0.7 to 1.3 atm, delivers 12 to 22 m³ per minute for unloading of 20 to 50 tons of bulk material per hour; this being dependent on the type of material and the carrying height and the discharge distance over which the material is transported via hose 17 into a silo. The round discharge pipe 1 has an internal diameter of for example 75 mm to 125 mm and is connected via a butterfly valve 56 to the connection 12. After blower 53 has been set into operation and the spaces 3, the empty reservoirs 11 and the upper parts of the reservoirs 11 still filled with material 7 have been filled with compressed air while stop valve 15 is closed, the closing member 10 of the reservoir 11 for unloading is raised to a height dependent on the length of the hose 17, the carrying height, the specific weight and the nature of the material for unloading, this preferably being done precisely such that there is no danger of hose 17 becoming blocked. The closing member 19 is usually opened to the maximum.

Situated under each discharge funnel 8, i.e. under each discharge funnel opening 18, is a receiver 65 which in fact forms part of the discharge pipe 1 which receives the material from discharge funnel 8.

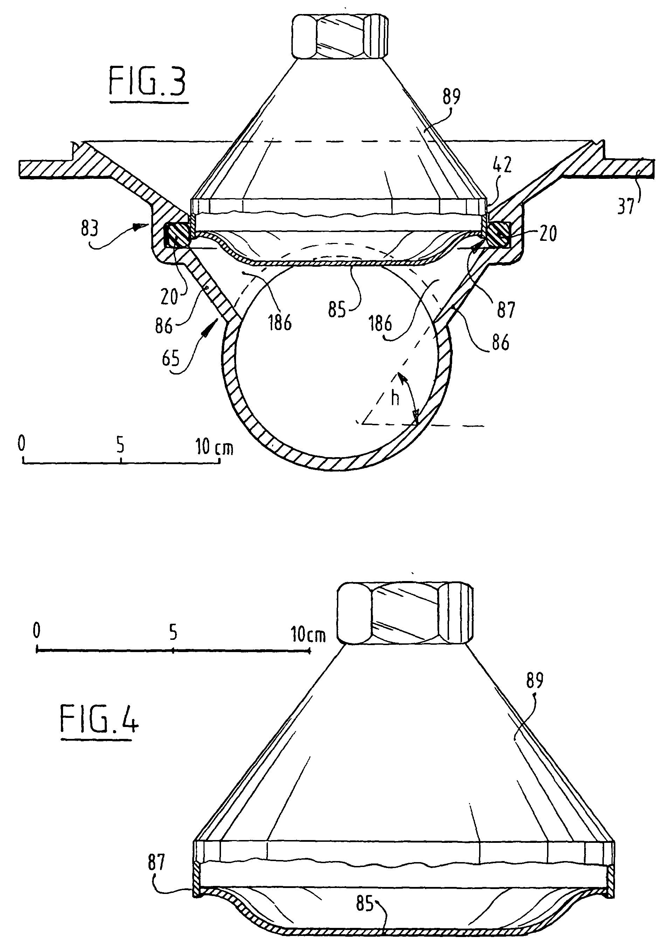

As designated in figure 3, the flow of air possibly containing material already discharged from a discharge funnel 8 located upstream is guided according to the invention close to the receiver 65 by means of a valve bottom 85 extending downward under discharge funnel opening 18.

As shown in figure 3, the passage is reduced by means of the valve bottom 85 at the height of the valve opening as compared to a situation where the valve bottom were to lie in the closed position. The air flow is hereby disrupted less. The corner spaces 186 are formed such that the disruptive lodging of material is avoided. For this purpose the wall inclination h of casting wall 86 amounts to 55° ± 10° preferably 55° ± 5°, i.e. preferably precisely that inclination wherein the material for transporting no longer lodges on wall 86. The wall 86 does not become much steeper than necessary because discharge funnel 8 would then be unnecessarily higher, which - with an eye to the maximum construction height - would reduce the material quantity to be transported.

The valve bottom 85 connects with an S-shaped radial cross-section onto the cylindrical closing edge 87, embodied as cutting edge, of closing member 19. The material can hereby not become jammed in the top corner of the corner spaces 186.

The closing member 19 is driven up and downward by the cylinder rod 61 of a pneumatic cylinder 59 mounted on casting 83 through a stroke S which is so large that discharge funnel opening 18 can be left completely clear if a short hose 17 (i.e. a short transport path) allows this. In the shown embodiment S = 160 cm ± 5 cm. Owing to the small discharge funnel opening the adjustment height of the closing member is large, so that the ideal material throttling can be adjusted more accurately, wherein hose 17 does not quite become blocked and on the other hand the material flow rate is as high as possible. Discharge funnel opening 18 has a passage which is smaller than 300 cm² and preferably smaller than 200 cm², most preferably even 180 cm² ± 5 cm². Associated herewith is an adjustment range of 0 to S, wherein S amounts to at least 5 cm, preferably at least 10 cm or even more preferably at least 15 cm. The air cylinder 59 which is fed by the available air from the vehicle has quite a large diameter, for instance 12 cm ± 2 cm at an available air pressure of 8 bar (in the case of a different available air pressure the diameter of air cylinder 59 can be chosen differently), so that closing member 19 can be moved with considerable force through the material situated in the discharge funnel. The conical cap 89 reduces the force required, while the cap-shaped open bottom end of cylinder 59 prevents material becoming lodged between cylinder 59 and cap 89.

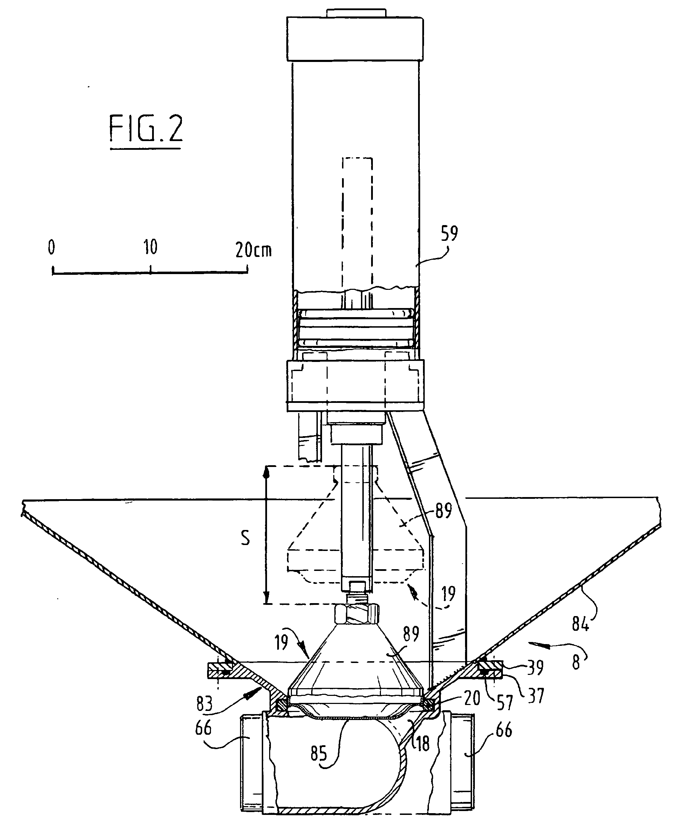

It is noted that a preferred embodiment is drawn to scale in figures 2-4.

## Claims

1. Vehicle (9) for transporting powder form, granular and/or pellet-like material, which vehicle (9) has a series of reservoirs (11) which are mutually separated by transverse partitions (5) and which have filling openings (6) which can be closed airtightly by means of covers (21) during unloading, in addition to discharge funnels (8) with discharge openings which are provided with a closing member (19) which is movable between a closed and an opened position, wherein the reservoirs (11) are closed on their underside by the funnels (8) when their closing members (19) are situated in the closed position, wherein the discharge funnels (8) of the reservoirs (11) form a series of discharge funnels (8) which are connected via said closing members (19) to receivers (65) which are disposed thereunder and arranged in a common discharge pipe (1), wherein the vehicle (9) comprises an air unit (53) connected onto said discharge pipe (1) for carrying an air flow through said discharge pipe (1), wherein the spaces of said reservoirs (11) are connected above the material to an air unit (53) which supplies compressed air, and wherein via the opened closing member (19) of the funnel (8) of at least one reservoir (11) material can be supplied to said air flow close to a receiver (65) placed below said opened closing member (19), wherein the closing member (19) has a conical cap (89) under a piston rod (61) of a drive cylinder (59) disposed fixedly in the reservoir (11) above the closing member (19),
**characterized in that**
at least one discharge funnel opening (18) has a passage which is smaller than 300 cm², that the wall inclination (h) between the discharge funnel opening (18) and the discharge pipe (1) amounts to 55° ± 10° and that the closing member (19) has on its underside a downward directed valve bottom (85) which reaches lower than the closing edge (87) of the closing member (19).

2. Vehicle as claimed in claim 1,
**characterized in that**
the closing member (19) has a valve bottom (85) which connects with an S-shaped radial cross-section onto the outer edge (87) of the closing member (19).

3. Vehicle as claimed in claim 1 or 2, **characterized in that** at least one receiver (65) forms one casting together with a discharge pipe piece (67), which casting has on each of its both ends a round connecting piece (66) for connection to another discharge pipe piece (69).

4. Vehicle as claimed in claim 1, 2 or 3,
**characterized in that**
at least one discharge funnel is a casting in which an annular chamber (82) for a sealing ring (20) is recessed at the position of the discharge funnel opening (18).

5. Vehicle as claimed in any of the foregoing claims,
**characterized in that**
at least one discharge funnel opening (18) has a passage which is smaller than 200 cm² and preferably smaller than 180 cm².

6. Vehicle as claimed in any of the foregoing claims,
**characterized in that**
under at least one discharge funnel opening the wall has an inclination (h) of more than 50°.

## Patentansprüche

1. Fahrzeug (9) für den Transport von pulverförmigem, körnigem und/oder pellet-förmigem Schüttgut, wobei das Fahrzeug (9) eine Reihe von Behältern (11) hat, die voneinander über transversale Trennwände (5) getrennt sind und die Einfüllöffnungen (6) haben, die luftdicht mit Hilfe von Deckeln (21) während des Entladens verschlossen werden können, zusätzlich zu Abgabetrichtern (8) mit Abgabeöffnungen, die mit einem Verschlußteil (19) versehen sind, das zwischen einer geschlossenen und einer offenen Stellung bewegbar ist, wobei die Behälter (11) an ihrer Unterseite durch die Trichter (8) verschlossen sind, wenn ihre Verschlußteile (19) in der geschlossenen Stellung angeordnet sind, wobei die Abgabetrichter (8) der Behälter (11) eine Reihe von Abgabetrichtern (8) bilden, die über die Verschlußteile (19) mit Aufnahmen (65) verbunden sind, die darunter angeordnet und in einem gemeinsamen Abgaberohr (1) angeordnet sind, wobei das Fahrzeug (9) eine Lufteinheit (53) umfaßt, die an dem Abgaberohr (1) angeschlossen ist, um einen Luftstrom durch das Abgaberohr (1) zu führen, wobei die Räume der Behälter (11) oberhalb des Materials an einer Lufteinheit (53) angeschlossen sind, die Druckluft zuführt und wobei über das geöffnete Verschlußteil (19) des Trichters (8) wenigstens eines Behälters (11) Material dem Luftstrom in der Nähe eines Behälters (65) zuführbar ist, der unterhalb des geöffneten Verschlußteils (19) angeordnet ist, wobei das Verschlußteil (19) eine konische Kappe (89) unter einer Kolbenstange (61) eines Antriebszylinders (59) hat, der fest in dem Behälter (11), oberhalb des Verschlußteils (19), angeordnet ist, **dadurch gekennzeichnet, daß** wenigstens eine Abgabetrichteröffnung (18) einen Durchgang hat, der kleiner ist als 300 cm², daß die Wandneigung (h) zwischen der Abgabetrichteröffnung (18) und dem Abgaberohr (1) sich auf 55° ± 10° beläuft und daß das Verschlußteil (19) an seiner Unterseite einen nach unten gerichteten Ventilboden (85) hat, der tiefer reicht als der Verschlußrand (87) des Verschlußteils (19).

2. Fahrzeug nach Anspruch 1, **dadurch gekennzeichnet, daß** das Verschlußteil (19) einen Ventilboden (85) hat, der mit einem S-förmigen, radialen Querschnitt an dem äußeren Rand (87) des Verschlußteils (19) anschließt.

3. Fahrzeug nach Anspruch 1 oder 2, **dadurch gekennzeichnet, daß** wenigstens eine Aufnahme (65) zusammen mit einem Abgaberohrstück (67) ein Formteil bildet, wobei das Formteil an jedem seiner beiden Enden ein rundes Anschlußstück (66) zum Anschluß an einem anderen Abgaberohrstück (69) hat.

4. Fahrzeug nach Anspruch 1, 2 oder 3, **dadurch gekennzeichnet, daß** wenigstens ein Abgabetrichter ein Formstück ist, in dem eine ringförmige Kammer (82) für einen Dichtring (20) an der Stelle der Abgabetrichteröffnung (18) ausgenommen ist.

5. Fahrzeug nach einem der vorstehenden Ansprüche, **dadurch gekennzeichnet, daß** wenigstens eine Abgabetrichteröffnung (18) einen Durchgang hat, der kleiner als 200 cm² und vorzugsweise kleiner als 180 cm² ist.

6. Fahrzeug nach einem der vorstehenden Ansprüche, **dadurch gekennzeichnet, daß** die Wand unter wenigstens einer Abgabetrichteröffnung eine Neigung (h) von mehr als 50° hat.

## Revendications

1. Véhicule (9) pour transporter des matériaux en poudre, granulaires et/ou analogues à des pastilles, lequel véhicule (9) possède une série de réservoirs (11) qui sont séparés les uns des autres par des cloisons transversales (5) et qui présentent des ouvertures de remplissage (6) qui peuvent être fermées à joint étanche à l'air au moyen de couvercles (21) pendant le déchargement, en supplément de trémies de sortie (8) présentant des ouvertures de sortie qui sont équipées d'un élément de fermeture (19) qui peut être déplacé entre une position fermée et une position ouverte, dans lequel les réservoirs (11) sont fermés sur leur côté inférieur par les trémies (8) lorsque leurs éléments de fermeture (19) sont situés dans la position fermée, dans lequel les trémies de sortie (8) des réservoirs (11) forment une série de trémies de sortie (8) qui sont reliées par l'intermédiaire desdits éléments de fermeture (19) à des récipients (65) qui sont disposés au-dessous et arrangés dans un tube de sortie commun (1), dans lequel le véhicule (9) comprend une unité à air (53) reliée audit tube de sortie (1) pour faire passer un flux d'air à travers ledit tube de sortie (1), dans lequel les espaces desdits réservoirs (11) sont reliés au-dessus de la matière à une unité à air (53) qui fournit de l'air comprimé, et dans lequel, par l'intermédiaire de l'élément de fermeture ouvert (19) de la trémie (8) d'au moins un réservoir (11), de la matière peut être fournie audit flux d'air à proximité d'un récipient (65) placé au-dessous dudit élément de fermeture (19) ouvert, dans lequel l'élément de fermeture (19) possède un chapeau conique (89) au-dessous d'une tige de piston (61) d'un cylindre d'entraînement (59) disposé en position fixe dans le réservoir (11) au-dessus de l'élément de fermeture (19),
**caractérisé en ce que**
au moins une ouverture (18) de trémie de sortie possède un passage qui est de moins de 300 cm², que l'inclinaison (h) de la paroi entre l'ouverture (18) de la trémie de sortie et le tube de sortie (1) est de 55 ° ± 10° et que l'élément de fermeture (19) présente sur son côté inférieur une partie inférieure de soupape (85) dirigée vers le bas, qui se prolonge plus bas que le bord de fermeture (87) de l'élément de fermeture (19).

2. Véhicule selon la revendication 1,
**caractérisé en ce que**
l'élément de fermeture (19) possède une partie inférieure de soupape (85) qui se raccorde avec une section radiale en forme de S au bord extérieur (87) de l'élément de fermeture (19).

3. Véhicule selon la revendication 1 ou 2,
**caractérisé en ce qu'**au moins un récipient (65) forme une seule pièce coulée avec un morceau (67) d'un tube de sortie, laquelle pièce coulée présente sur chacune de ses deux extrémités une pièce de raccordement ronde (66) pour le raccordement à un autre morceau du tube de sortie (69).

4. Véhicule selon la revendication 1, 2 ou 3,
**caractérisé en ce que**
au moins une trémie de sortie est une pièce coulée dans laquelle une chambre annulaire (82) prévue pour une bague d'étanchéité (20) est creusée au droit de l'ouverture (18) de la trémie de sortie.

5. Véhicule selon une quelconque des revendications précédentes,
**caractérisé en ce que**
au moins une ouverture (18) de trémie de sortie présente un passage qui est de moins de 200 cm² et de préférence de moins de 180 cm².

6. Véhicule selon une quelconque des revendications précédentes,
**caractérisé en ce que**
au-dessous d'au moins une ouverture de trémie de sortie, la paroi a une inclinaison (h) de plus de 50 °.
